# EUROPEAN PATENT APPLICATION

(11) **EP 4 803 452 A1**
(43) Date of publication of application: **09.09.2026**
(21) Application number: 25162101.7
(22) Date of filing: 06.03.2025
(51) Int. Cl.: B65G 35/06, B65G 54/02

(54) **TRANSPORT SYSTEM**

(71) Applicant: ABB SCHWEIZ AG, 5400 Baden (CH)
(72) Inventor: Herbst, Michael, 5164 Seeham (AT); Forthuber, Friedrich, 5144 Handenberg (AT)
(74) Representative: Weiss Patentanwalts GmbH

(57) **Abstract**

The present invention relates to a transport system (1) comprising at least one electromagnetic transport device (2) and at least one continuous conveyor (6). The electromagnetic transport device (2) comprises a stator (31, 32, 3i) and at least one shuttle (4, 4i), which is moveable relative to the stator (31, 32, 3i) along a transport path. Drive magnets (51) are arranged on at least one shuttle (4, 4i), which interact electromagnetically with electromagnetic or magnetic elements, in particular drive coils, arranged on the stator (31, 32, 3i) to move the at least one shuttle (4, 4i) in at least one direction (T) of movement along the transport path. The at least one continuous conveyor (6) comprises conveying means (7) to move the at least one shuttle (4, 4i) in a conveying direction (M) along the transport path. To reliably and safely prevent uncontrolled and/or unwanted movements of the at least one shuttle (4) on the conveying means (7) of the at least one continuous conveyor (6), the conveying means (7) comprises ferromagnetic and/or magnetic elements (8) to interact with the drive magnets (51) of the at least one shuttle (4, 4i), wherein an arrangement of the ferromagnetic and/or magnetic elements (8) of the conveying means (7) is configured in such a way that a predeterminable holding force (F_{H}) is established between the at least one shuttle (4) of the electromagnetic transport device (2) and the conveying means (7) of the continuous conveyor (6) due to an interaction of the drive magnets (51) of the at least one shuttle (4) and the ferromagnetic and/or magnetic elements (8) of the conveying means (7).

## Description

### TECHNICAL FIELD OF THE INVENTION

The present invention relates generally to the field of plant engineering, in particular to the field of automation technology. The present invention relates to a transport system comprising at least one electromagnetic transport device with a stator and at least one shuttle, which is moveable relative to the stator along a transport path, wherein drive magnets are arranged on the at least one shuttle, and wherein the drive magnets of the at least one shuttle interact electromagnetically with electromagnetic or magnetic elements, in particular drive coils, arranged on the stator to move the shuttle in at least one direction of movement along the transport path, and at least one continuous conveyor comprising conveying means to move the at least one shuttle in a conveying direction along the transport path.

### BACKGROUND INFORMATION

Nowadays, in most of the modern manufacturing and production facilities, it is necessary to move components, workpieces, products, etc. between the individual handling and production stations using transport equipment. Various transport and conveying devices, are used for the transport of the components, workpieces, products, etc. Traditional transport devices like e.g., continuous conveyors, chain conveyors or conveyor belts in different designs can be used to transport and/or convey components, products, or workpieces. These traditional transport devices usually convert a rotary movement of an electric drive into a linear movement of e.g. a chain, belt, etc. However, the flexibility of traditional transport devices is considerably limited, especially the individual transport of single transport units is not possible. So, electromagnetic transport devices in the form of long stator linear motor (or short: LLM) and/or in the form of planar motor (short: PM) become more frequently used to meet the requirements of modern and flexible transport equipment in manufacturing and production facilities.

Long stator linear motors and planar motors as well as their applications and their mode of operation are well known from the state of the art. Both - a long stator linear motor and a planar motor - comprise at least one movable part, which is also referred to as transport unit or shuttle, and a fixed part or a stator. The shuttle can be moved relative to the stator in at least one direction of movement, due to interacting magnetic fields. For this purpose, a magnet unit is arranged on the shuttle. The magnet unit comprises an arrangement of drive magnets, either electromagnets or permanent magnets, for example. The magnetic field of the drive magnets of the at least one shuttle interacts electromagnetically with a moving magnetic field generated by (electro)magnetic elements, arranged on the fixed part or stator. The interaction of the magnetic field of the drive magnets of the shuttle and the moving magnetic field of the stator generates driving forces, which moves the at least one shuttle in a desired manner. Usually, the moving magnetic field of the stator is generated by energizing drive coils arranged on the stator, wherein the magnet unit of the shuttle comprises permanent magnets as drive magnets. If a voltage is applied to the drive coils, a magnetic field is generated, which interacts with the magnetic field of the magnet unit, thereby generating a force, which moves the shuttle. A moving magnetic field is generated by appropriate control of energizing the drive coils to move the shuttle along a predefined path along a transport track or within a transport plane. I.e., by controlling the energization or the voltage applied to the individual drive coils to regulate the magnetic flux, the magnitude of the driving forces, in particular of a propulsive force, is influenced and the shuttle can be moved on the stator in a desired manner and direction. Alternatively, the stator may comprise moveable permanent magnets for generating the moving magnetic field, wherein the shuttle may comprise electromagnets as drive magnet.

A long stator linear motor generally comprises a fixed part or stator, which usually consists of many stator segments. The (electro)magnetic elements, usually drive coils, are arranged in fixed positions to each other on the stator or on the stator segments. The stator segments can have different geometries (e.g., straight lines, curves, track switches, etc.) and can be assembled into a desired stator by lining them up accordingly. The stator or several stator segments then form the transport track or transport path, along which at least one shuttle, usually several shuttles, can be moved. For this purpose, the magnet unit is arranged on the shuttle, which magnet unit comprises an arrangement of several drive magnets, usually permanent magnets, but also electromagnets are possible. The magnetic field of the magnet unit interacts with (electromagnetic field generated by energizing the drive coils of the stator. LLMs are known, for example, from WO 2013/143783 A1 or US2013/0074724 A1.

A planar motor, which are used, for example, in production processes or transport processes requiring complex motion profiles, also comprises a stator like a long stator linear motor, which may comprise one or several stator segments. However, the stator or stator segments of the planar motor form a transport plane, in which one or more shuttles can be moved at least two-dimensionally. The drive coils of the planar motor are therefore arranged in the transport plane, in some embodiments also in several planes. A driving force, acting on the shuttle, is generated to move the shuttle e.g., along a transport path within the transport plane. For this purpose, a magnetic field, which is generated e.g., by the magnet unit of the shuttle, interacts with a magnetic field of the stator generated by energizing the drive coils accordingly. US 9,202,719 B2 or WO 2019/129576 A1, for example, disclose the basic structure and mode of operation of a planar motor.

Since the basic motor principle of a long stator linear motor or of a planar motor is well known, there is no need to go into further details here.

Electromagnetic transport devices like long stator linear motors and/or planar motors are often used in production lines to facilitate different types of industrial operations. For example, they may be utilized to move different objects (e.g., loads, components, products, workpieces, or packaging units like e.g., bottles, containers, etc.) with their shuttles between the different workstations of a production line or to different areas in a manufacturing or packaging operation. Long stator linear motors and planar motors are often modular - i.e., the stator comprises several stator segments, as mentioned above, which can be linked to form a transport track or transport plane, on which the shuttles can be moved e.g., between workstations or to areas of a manufacturing or packaging operations. The transport track formed by the stator of a long stator linear motor, for example, can be composed of different stator segments in the form of straight line segments, curved segments and/or switches. The stator of a planar motor, which forms a transport plane for the shuttles, can also comprise several stator segments, which can be connected in virtually any pattern necessary for the respective application of the planar motor, for example. However, due to the nature of the interaction between the shuttles and the stator segments in long stator linear motors and planar motors, these transport devices mainly include straight or curved transport paths, wherein the shuttles are almost always moved in the same movement plane that is essentially determined by the stator forming the transport track or transport plane for the shuttles.

However, to be able to move a shuttle not only in one movement plane, but also to provide transport paths for applications in which shuttles can move between different movement planes, transition segments are required, for example, which are designed in such a way that the shuttle can be moved from movement plane to another without interruption. Since forming a transport path comprising transition segments for linking different movement planes and/or curved sections, for example with a sophisticated linear motor geometry including a laminated stator package, are complicated to realize and hardly applicable, transport systems are used for such applications, which combine various conveying means, for example.

These transport systems combine continuous conveyors mentioned in the outset, in particular in the form of conveyor belts, with long stator linear motors and/or planar motors. I.e., that, for example, at least one stator segment of the long stator linear motor or the planar motor is replaced by a continuous conveyor, e.g. in the form of a conveyor belt. The continuous conveyor, in particular in the form of a conveyor belt, is a transport device of low complexity, which can be used for bridging long distances in a production line between two long stator linear motors and/or planar motors, for example. The continuous conveyor, especially in the form of a conveyor belt, is also particularly suitable for realizing curved section of the transport path or for being used as a transition segment, which allows shuttles to be moved to movement planes that are relatively higher or lower than their original movement plane. A transport system, which combines a long stator linear motor with a continuous conveyor, is known from EP 3 501 878 A1, for example. The transport system, shown in EP 3 501 878 A1, combines a long stator linear motor with a continuous conveyor to move the shuttles in a direction of movement at least sectionally in a conveying plane deviating from the movement plane of the transport track formed by the stator of the long stator linear motor, for example.

While the shuttles are moved on sections of the transport path designed as a continuous conveyor, e.g. conveyor belt or conveyor chain, forces act on the shuttles due to the movement of the conveying means of the continuous conveyor or conveyor belt, e.g. belt or chain. Especially if the continuous conveyor realizes a curved section of the transport path, tangential and radial forces, which depend on the conveying speed, act on the shuttles. These forces can lead to undesired and unwanted movements of the shuttles on the conveying means of the continuous conveyor. In the worst case, a shuttle can fall off the conveying means.

As shown in EP 3 501 878 A1, for example, the conveying means of the continuous conveyor may be made of a suitable ferromagnetic material to hold the shuttles on the conveying means due to the magnetic interaction between the ferromagnetic material and the drive magnets of the respective shuttles. Alternatively, ferromagnetic elements may be integrated into a conveying means made of plastic to generate a holding force due to the magnetic interaction between the ferromagnetic elements and the drive magnets of the respective shuttle, which is intended to keep the shuttle on the continuous conveyor. However, the holding force generated by the magnetic interaction is often not able to safely and reliably prevent unwanted and undesired movements of the shuttles, while being moved by the continuous conveyor of the transport system (e.g. in curves or during acceleration and deceleration of the conveying means).

### SUMMARY

Against this background, the present invention is based on the task to provide a transport system, which combines an electromagnetic transport device in the form of a long-stator linear motor and/or planar motor with a conventional continuous conveyor, in particular in the form of a conveyor belt, which reliably and safely prevents uncontrolled and/or unwanted movements of the shuttles, while being moved by the continuous conveyor.

These and other objectives are solved by a transport system according to the independent claim. Advantageous embodiments of the present invention are described by the dependent claims.

According to the invention, these and other objectives are achieved by a transport system described at the outset, wherein the conveying means comprises ferromagnetic and/or magnetic element. I.e., the conveying means comprises either ferromagnetic elements or magnetic elements or a combination of ferromagnetic elements and magnetic elements. Furthermore, an arrangement of the ferromagnetic and/or magnetic elements on the conveying means of the continuous conveyor is configured in such a way that a predeterminable holding force can be established between the at least one shuttle of the electromagnetic device and the conveying means of the continuous conveyor due to an interaction of the drive magnets of the at least one shuttle and the ferromagnetic and/or magnetic elements of the conveying means.

The main aspect of the present invention is that the ferromagnetic and/or magnetic elements of the conveying means of the continuous conveyor are arranged in such an optimized manner as to achieve the predeterminable holding force. The holding force between the shuttle and the conveying means is based on magnetostatic reluctance effects, wherein the arrangement of the ferromagnetic and/or magnetic elements generates section of different reluctance and is optimized to achieve the predeterminable holding force or especially a maximal holding force. This predeterminable holding force reliably and safely keeps the shuttle on the conveying means despite the speed-dependent tangential and radial forces acting on the shuttle and prevents uncontrollable and/or unwanted movements of the shuttle, while traveling on the conveying means, thus also improving the safety of the transport system.

It is advantageous, when the arrangement of the ferromagnetic and/or magnetic elements of the conveying means is adapted to a pole pitch of an arrangement the drive magnets of the at least one shuttle. The adaption of the arrangement of the ferromagnetic and/or magnetic elements of the conveying means in accordance with the pole pitch of the shuttle represents an improvement of the transport system, which can be realized without great effort and without high costs, but which significantly enhanced the safety of the transport system.

In a preferred embodiment, the conveying means are configured as modular conveyor belt comprising modules or conveyor chain comprising chain links made of plastic, wherein the ferromagnetic and/or magnetic elements are embedded in or arranged on the modules of the conveyor belt or the chain links of the conveyor chain. Ideally, a chain pitch of the ferromagnetic and/or magnetic elements embedded in or arranged on the modules of the conveyor belt or in the chain links of the conveyor chain is adapted to the pole pitch of the arrangement of the drive magnets of the at least one shuttle. By adapting the chain pitch of the conveying means to the pole pitch of the shuttle, the reluctance forces may be reduced and consequently the holding force may be optimized, in particular maximized, to keep the shuttle on its position on the conveying means.

Alternatively, the conveying means is configured as a belt made of ferromagnetic material, in particular of steel, for example, to prevent the so-called polygon effect, which may occur when using modular conveyor belts or conveyor chains as conveying means. The belt of ferromagnetic material has alternately arranged sections of high reluctance and of low reluctance in the conveying direction of the continuous conveyor. I.e., the belt of ferromagnetic material comprises alternately arranged sections of different reluctance, wherein the reluctance of one kind of sections is significantly higher than the reluctance of the other kind of sections. The sections of low reluctance form the ferromagnetic elements of the conveying means. The alternately arranged sections of high and low reluctance can ideally be created by punching out sections in the belt, by thickening the belt in sections and/or by widening the belt in sections. Ideally, a distance between the sections of low reluctance forming the ferromagnetic elements of the belt or conveying means is adapted to the pole pitch of the arrangement of the drive magnets of the shuttle, whereby the reluctance forces may be reduced and consequently the holding force may be optimized, in particular maximized, to keep the shuttle on its position on the conveying means.

In further preferred embodiment of the transport system according to the invention, the at least one continuous conveyor comprises at least one additional conveying means, also comprising ferromagnetic and/or magnetic elements to interact with the drive magnets of the shuttle, wherein the at least one additional conveying means runs synchronously in the conveying direction in parallel or below the conveying means. The arrangement of the ferromagnetic and/or magnetic elements of the additional conveying means may also be configured in such a way that a predeterminable holding force can be established between the at least one shuttle and the additional conveying means of the continuous conveyor.

Furthermore, it is possible to manipulate and/or adjust the holding force, which acts on the shuttle, if the arrangement of the ferromagnetic and/or magnetic elements of the additional conveying means is shifted relative to the ferromagnetic and/or magnetic elements of the conveying means, while both conveying means are running during operation of the transport system. Furthermore, it is also possible to define an orientation of the shuttle on the conveying means due to the shift or displacement of the ferromagnetic and/or magnetic elements of the additional conveying means relative to the ferromagnetic and/or magnetic elements of the conveying means during the operation of both conveying means.

Ideally, the conveying means and the at least one additional conveying means can be moved with different speeds during operation. Alternatively, the conveying means and the at least one additional conveying means can be moved with the same speed during operation, wherein an additional movement is superimposed on a movement of the conveying means or of the at least one additional conveying means. The different speeds of the conveying means, and the additional conveying means or the additional movement, which superimposes the movement of one of the conveying means and the at least one additional conveying means, cause an additional impulse (e.g., angular momentum) on the shuttle, which pushes it into the desired position or orientation. In this way, the shuttle can easily be brought into a desired or predefined position or orientation on the conveying means, which may be predefined, for example, by the handling of an object, transported by the shuttle, by robot in a workstation or by an inspection of the shuttle in an inspection station for inspecting and sorting out of shuttles.

The at least one additional conveying means is also configured as modular conveyor belt comprising modules or conveyor chain comprising chain links made of plastic, wherein the ferromagnetic and/or magnetic elements are integrated in the modules of the conveyor belt or the chain links of the conveyor chain. Alternatively, the at least one additional conveying means can be configured as a belt made of ferromagnetic material, in particular steel, which has alternately arranged areas of high reluctance and low reluctance in the conveying direction, wherein the areas of low reluctance form the ferromagnetic elements of the at least one additional conveying means.

Furthermore, it is also advantageous, when the conveying means and/or the at least one additional conveying means can be lowered perpendicularly to the conveying direction of the continuous conveyor. By using an additional conveying means, the holding force can be adjusted during operation of the transport system, especially if both conveying means can be lowered independently of each other. In this way, the holding force can be easily adapted to different shuttle types or in accordance with a shuttle load, for example.

Ideally, the at least one electromagnetic transport device is configured as a long-stator linear motor system and/or planar motor system. In this way, flexible transport systems can be created that are adapted to the respective application.

### BRIEF DESCRIPTION OF THE DRAWINGS

The present invention is described below in greater detail with reference to Figs.1 to 3, which show schematic and non-limiting advantageous embodiments of the invention by way of example. In the drawings:
Fig. 1 shows an embodiment of a transport system combining an electromagnetic transport device with a continuous conveyor according to the invention;
Figs. 2a, 2b and 2c show exemplary different embodiments of the conveying means comprising an arrangement of ferromagnetic and/or magnetic elements;
Fig. 3 shows another embodiment of the transport system combining an electromagnetic transport device with a continuous conveyor according to the invention.

### DETAILED DESCRIPTION

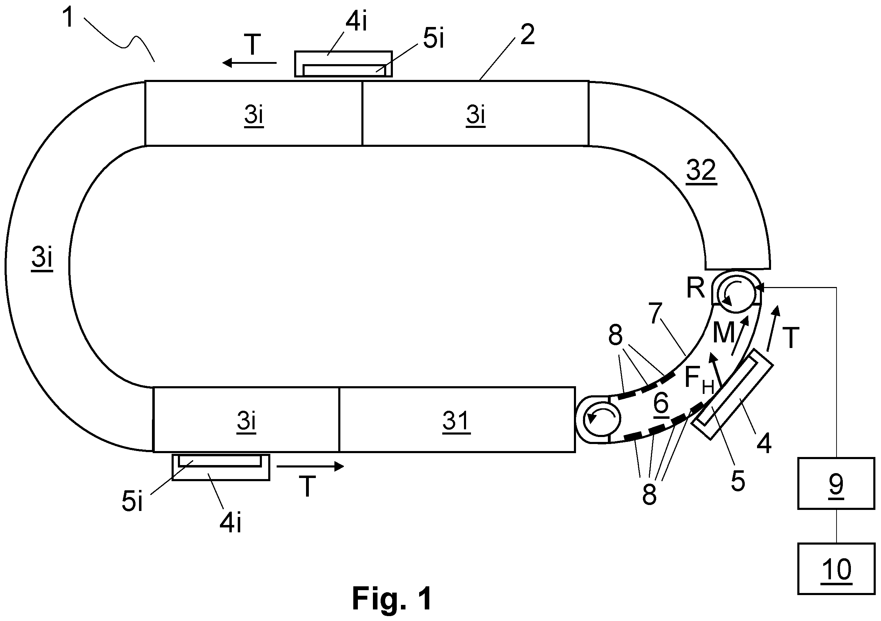

Fig. 1 shows exemplary and schematically a transport system 1, which comprises at least one electromagnetic transport device 2 and at least one continuous conveyor 6. The electromagnetic transport device 2, exemplary shown in Fig. 1, used to describe the invention is a simplified representation of an electromagnetic transport device 2 in the form of a long-stator linear motor (short LLM), but the invention can also be applied analogously to a planar motor (short PM) or other embodiments of an electromagnetic transport device 2.

The electromagnetic transport device 2 comprises a fixed part or stator and at least one moveable part 4, 4i or shuttle 4, 4i. The stator usually consists of at least two, normally numerous stator segments 31, 32, 3i. The shuttles 4, 4i can be moved relative to the (fixed) stator due to interacting magnetic fields. For this purpose, electromagnetic elements, like energizable drive coils, which are not shown in Fig. 1, are arranged on the stator or on the stator segments 31, 32, 3i,. In case of an electromagnetic transport device 2 in the form of a long stator linear motor (as shown in Fig. 1), the drive coils are arranged next to one another in a direction T of movement of the individual shuttles 4, 4i. The stator or the stator segments 31, 32, 3i form the transport track and thus predefines the transport path, along which the shuttles 4, 4i can be moved in the direction T of movement, for example.

In Fig.1 the transport path predefined by the stator or the stator segments 31, 32, 3i is in the form of a closed transport path, for example. Furthermore, the electromagnetic transport device 2 in the form of an LLM may have route guide elements (not shown in Fig. 1), which interact with guide elements (not shown in Fig. 1) of the shuttles 4, 4i. The guide elements of the shuttles 4, 4i can be configured as rollers, wheels, sliding elements, guiding surfaces, or sliding surfaces, etc., whereby the route guiding elements have to be designed in such a way that the respective guide elements can be guided therein.

Each shuttle 4, 4i comprises a magnet unit 5, 5i, which comprises an arrangement of several drive magnets 51. If the drive coils of the stator are energized in the range of an individual shuttle 4i (by application of an electrical voltage), e.g., under the control of a control unit (not shown in Fig. 1), a drive magnetic field is generated, which interacts with the magnetic field of the magnet unit 5i of the individual shuttle 4i. Thus, driving forces are generated - in case of an LLM a propulsive force is generated, for example, which drives the individual shuttle 4i and moves it along the predefined transport path formed by the stator or the stator segments 31, 32, 3i. Usually, permanent magnets are used as drive magnets 51 arranged on the shuttle 4, 4i, but it is also possible to use electromagnets. In the case of electromagnets used as drive magnets 51, permanent magnets could be provided on the fixed part of the transport device 2 instead of drive coils, to generate a moving magnet field. Since the motor principle of long stator linear motors is well known, it will not be discussed in detail here.

Furthermore, the embodiment of the transport system 1, as exemplary shown in the Fig. 1, comprises at least one continuous conveyor 6, which replaces at least one stator segment 3i, for example a curved stator segment. The continuous conveyor 6 is, for example, arranged between a first stator segment 31 and a second stator segment 32 of the predefined transport path, for example. If a shuttle 4, 4i is moving along the transport path of the transport system 1, the shuttle 4, for example, is transferred from the first stator segment 31 to the continuous conveyor 6 and from the continuous conveyor 6 to the second stator segment 32, for example, depending on the direction T of movement of the shuttles 4, 4i on the stator. I.e., that in between the two stator segments 31, 32 the exemplary shuttle 4 is moved by the continuous conveyor 6 in a conveying direction M, which corresponds the direction T of movement of the shuttle 4, 4i along the stator of the electromagnetic transport device 2 in form of a LLM, for example.

The continuous conveyor 6 at least comprises a conveying means 7, which is driven by a suitable drive unit 9. The drive unit 9 may comprise a drive element as well as a motor unit (e.g. an electric motor) coupled to the drive element e.g. by a drive shaft to generate a rotatory motion R of the drive element and thus move the conveying means 7 linearly in the conveying direction M. A suitable control unit 10 can be used to control and monitor the movement of the continuous conveyor 6. The control unit 10 may be integrated into the control unit (not shown in Fig. 1) of the electromagnetic transport device 2. The continuous conveyor 6 can convey several shuttles 4 simultaneously, however, in contrast to the electromagnetic transport device 2 the shuttles 4 moved by the continuous conveyor 6 cannot be controlled independently of each other. The shuttles 4 are moved at a conveying speed and in the conveying direction M by the drive unit 9 and the control unit 10 of the continuous conveyor 6. The conveying speed of the continuous conveyor 6 is preferably constant, but an acceleration or a deceleration of the continuous conveyor 6 would also be possible.

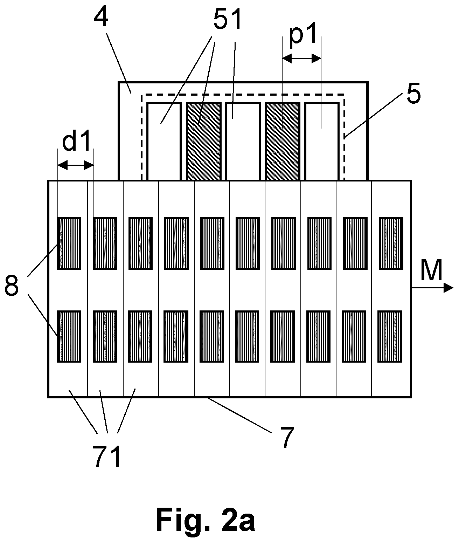

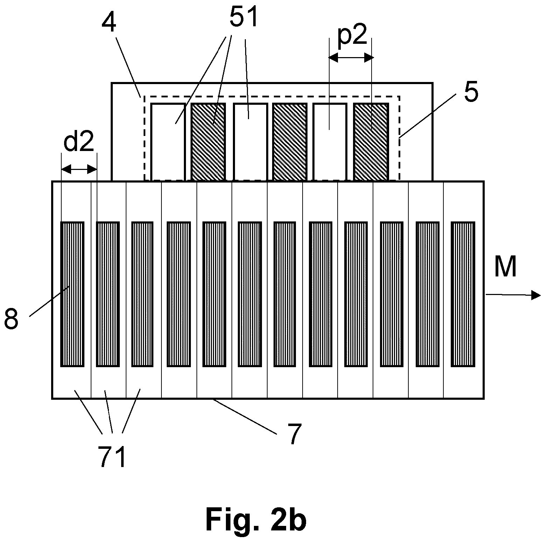

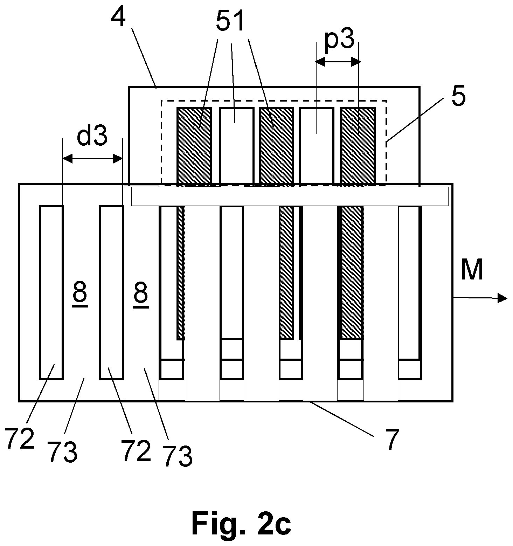

Furthermore, the conveying means 7 of the continuous conveyor 6 also comprises ferromagnetic and/or magnetic elements 8. I.e., the conveying means comprises either ferromagnetic elements or magnetic elements or a combination of ferromagnetic elements and magnetic elements, wherein the ferromagnetic elements are made of ferromagnetic material, like e.g., steel, iron, cobalt, nickel, etc.). For reasons of clarity, only some of these ferromagnetic and/or magnetic elements 8 are exemplarily shown in Fig. 1. Usually, the whole conveying means 7 comprises the ferromagnetic and/or magnetic elements 8, e.g., arranged along a circumference of the conveying means 7 depending on the possible embodiment of the conveying means, exemplarily shown in Figs. 2a, 2b and 2c.

During operation of the transport system 1, the shuttles 4, 4i are moved along the transport path formed by the stator of the electromagnetic transport device 2. The shuttle 4, for example, is transferred from the first stator segment 31 of the electromagnetic transport device 2 to the conveying means 7 of the continuous conveyor 6 replacing at least one stator segment 3i. At that change over from the first stator segment 31 to the conveying means 7 an interaction between the shuttle 4 and the conveying means 7 of the continuous conveyor 6 starts. While the shuttle 4 is moved by the continuous conveyor 6, the ferromagnetic and/or magnetic elements 8 of the conveying means 7 interact with the drive magnets 51 of the magnet unit 5 of the shuttle 4. In this way, a holding force F_{H} is generated. The arrangement of the ferromagnetic and/or magnetic elements 8 of the conveying means 7 is configured in such a way that the holding force F_{H} generated by the interaction of the drive magnets 51 of the magnet unit 5 of the shuttle 4 and the ferromagnetic and/or magnetic elements 8 of the conveying means 7 can be set to a predeterminable value or to an optimized holding force F_{H}. I.e., a predeterminable and thus optimized holding force F_{H} is established between the shuttle 4 and the conveying means 7, which holding force F_{H} keeps the shuttle 4 reliably and safely on the conveying means 7 and prevents unwanted and/or undesired and/or uncontrollable movement of the shuttle 4, while being moved by the continuous conveyor 7. For example, the arrangement of the ferromagnetic and/or magnetic elements 8, which may comprise a number of the ferromagnetic and/or magnetic elements 8, shape and/or size of the ferromagnetic and/or magnetic elements 8 as well as a position or distance d1, d2, d3 of the ferromagnetic and/or magnetic elements 8 relative to each other, for example, can be in such a way that the predeterminable holding force F_{H} can be specifically adjusted or maximized.

The holding force F_{H} comprises a transport force and an attraction force, for example, as components (not shown in Fig. 1). The transport force acts in the conveying direction M and tracks the shuttle 4 with the conveying means. The attraction force acts perpendicular to a surface of the conveying means 7 and tracks the shuttle 4 to the conveying means 7. Additionally, a friction force may act between the shuttle 4 and the surface of the conveying means 7. Both, the transport force and the attraction force, can be predefined by the predeterminable and optimized holding force F_{H}.

Exemplary arrangements of the ferromagnetic and/or magnetic elements 8 arranged on or embedded in the conveying means 7 of the continuous conveyor 6 are shown in Figs. 2a and 2b. The continuous conveyor 6 may be configured as belt-conveyor or chain-conveyor, for example. The conveying means 7 used may be configured as a modular conveyor belt or a conveyor chain, as exemplary shown in Figs. 2a and 2b. The conveying means 7 then comprises numerous linked modules 71 or chain links 71, which are made of plastic, for example. The ferromagnetic and/or magnetic elements 8 may be arranged on the respective modules 71 or chain links 71 embedded with the respective modules 71 or chain links 71. The arrangement of the ferromagnetic and/or magnetic elements 8 is adapted to a pole pitch p1, p2 of an arrangement of the drive magnets 51 in the magnet unit 5 of the shuttle 4, wherein the pole pitch p1, p2 is considered as the peripheral distance between the center of two adjacent poles in the magnet unit 5 of the shuttle 4.

Fig. 2a, for example, shows an exemplary shuttle 4 of the electromagnetic transport device 2 comprising a magnet unit 5 with several drive magnets 51 (e.g., five magnets 51). These drive magnets 51, e.g., usually permanent magnets, are arranged with alternating polarity on the shuttle 4. I.e., that the adjacent drive magnets 51, which may be of the same design, may alternate different polarity (e.g. north pole following south pole or vice versa), as indicated by the different shading of the drive magnets 51 in Fig. 2a. The distance between the pole of two adjacent drive magnets 51 define the pole pitch p1 of the arrangement of the drive magnets, wherein the arrangement of drive magnets 51 of the shuttle 4, shown in Fig. 2a, has a pole pitch p1. This pole pitch p1 is used to adapt the arrangement of the ferromagnetic and/or magnetic elements 8 of the conveyor means 7 of the continuous conveyor 6. In particular, a chain pitch d1 of the ferromagnetic and/or magnetic elements 8 arranged on or embedded in the modules 71 of the conveyor means 7 is adapted to the first pole pitch p1. For example, a distance d1 between a rear edge, viewed in the conveying direction M, of a ferromagnetic and/or magnetic element 8 and a rear edge, viewed in the conveying direction M, of a further ferromagnetic and/or magnetic element 8, which is arranged adjacent in front of the ferromagnetic and/or magnetic element 8 viewed the conveying direction M, can be considered as chain pitch d1. The chain pitch d1 in accordance with the pole pitch p1 has the advantage of reducing the reluctance forces and may lead optimizing, in particular maximizing, the holding force F_{H}, which forms between the shuttle 4 and the conveyor means 7. Additionally, the number of the ferromagnetic and/or magnetic elements 8 as well as their size and/or shape may also be adapted to achieve the predeterminable holding force F_{H}.

Fig. 2b also shows an exemplary shuttle 4 of the electromagnetic transport device 2, comprising a magnet unit 5 with several drive magnets 51 (e.g. six magnets 51). Analogous to Fig. 2a, the drive magnets 51 (e.g., usually permanent magnets) are also arranged with alternating polarity (e.g., alternating south and north poles) - indicated by the different shading of the drive magnets 51 in Fig. 2b. In Fig. 2b, however, the arrangement of the drive magnets 51 has a different pole pitch p2. Therefore the continuous conveyor 6 is provided with conveyor means 7, e.g. a conveyor belt or conveyor chain, in which the arrangement of the ferromagnetic and/or magnetic elements 8 is adapted to the different pole pitch p2 of the arrangement of the drive magnet 51 of the shuttle 4. In particular, the chain pitch d2 of the ferromagnetic and/or magnetic elements 8 embedded in the modules 71 of the conveying means or arranged on the modules 71 of the conveying means 7 can be adapted to the different pole pitch p2. Additionally, the number of the ferromagnetic and/or magnetic elements 8 as well as their size and/or shape may again be adapted to achieve the predeterminable holding force F_{H}.

The arrangement of ferromagnetic and/or magnetic elements 8 of the conveying means 7, exemplarily shown in Figs. 2a and 2b, may comprise either only ferromagnetic elements 8 or only magnetic elements 8 or a combination of ferromagnetic elements 8 and magnetic elements 8. In particular with an embodiment of the conveying means 7 comprising both kinds of elements 8, a predeterminable holding force F_{H} may be established, which safely keeps the shuttle 4 on the conveying means, but which also facilitates a detachment of the shuttle 4, when it is transferred from the conveying means 7 to the stator of electromagnetic transport device 2, for example.

In case, the shuttle 4 comprises electromagnets as drive magnets 51, it is also possible to reduce or switch off the voltage for energizing the electromagnets to change, in particular to reduce, the holding force F_{H}, for example. The shuttle 4 can be detached more easily from the conveying means 7, for example.

Fig. 2c shows an alternative embodiment of the conveying means 7, which may be used in the continuous conveyor 6 of the transport system 1. The conveying means 7 is configured as a belt of ferromagnetic material, for example, steel. This belt 7 has alternately arranged sections 72 of high reluctance and sections 73 of low reluctance in the conveying direction M. The sections 72 of high reluctance have a significantly higher reluctance than the sections 73 of low reluctance. The alternately arranged sections 72, 73 of high and low reluctance are, for example, achieved by punching out sections of the belt 7, as exemplary shown in Fig. 2c, to generate sections 72 of high reluctance. The remaining sections of ferromagnetic material of the belt 7 are the sections 73 of low reluctance, which form the ferromagnetic elements 8 interacting with the drive magnets 51 (e.g. usually permanent magnets with alternating polarity) of the magnet unit 5 of the shuttle 4. Analogous to Figs. 2a and 2b, the drive magnets 51 (e.g., usually permanent magnets) are arranged with alternating polarity (e.g., alternating south and north poles) - indicated by the different shading of the drive magnets 51 in Fig. 2c. In Fig. 2c, the arrangement of the drive magnets 51 has a pole pitch p3, for example. The distance d3 between the sections 73 of low reluctance forming the ferromagnetic elements 8, (e.g. from a rear edge, viewed in the conveying direction M, of a further section 73 of low reluctance, which is arranged adjacent in front of the section 73 of low reluctance viewed the conveying direction M) can be adapted to pol pitch p3 of the arrangement of the drive magnets 51 of the shuttle 4. Instead of punching-outs 72 in the belt 7, the alternating arrangement of sections 72, 73 with high and low reluctance can also be produced, for example, by thickening the ferromagnetic belt 7 or by widening the ferromagnetic belt 7, whereby the thickened or widened sections have a lower reluctance than the other non-thickened or non-widened sections and thus serve as ferromagnetic elements 8, for example.

The arrangement of the ferromagnetic and/or magnetic elements 8 of the conveying means 7 - in particular a chain pitch d1, d2 or the distance d3 of sections 73 of low reluctance providing an optimized or maximized holding force F_{H} - may be determined or elaborated either by testing with prototypes or by using mathematic methods (e.g., Finite element analysis, reluctance model, etc.) during a design phase of the transport system 1. In particular, the usage of mathematic methods is based on a simulation of an arrangement simulating the reluctance forces, while the shuttle 4 moving on the conveying means 7 with ferromagnetic and/or magnetic elements 8, being arranged differently, e.g. with different chain pitches d1, d2 or distances d3, to find an arrangement of the ferromagnetic and/or magnetic elements 8, at which a predetermined or desired holding force F_{H} is achieved.

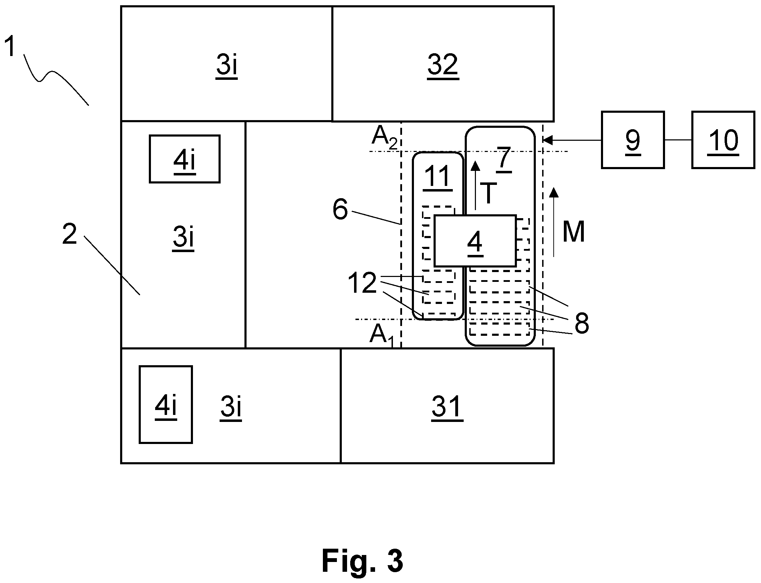

Fig. 3 shows another embodiment of the transport system 1 with at least one electromagnetic transport device 2 and at least one continuous conveyor 6. The electromagnetic transport device 2, exemplary shown in Fig. 3 for a top view perspective, is a simplified representation of an electromagnetic transport device 2 in the form of a planar motor (short PM), for example, but an electromagnetic transport device 2 in the form of an LLM or other embodiments of an electromagnetic transport device 2 can be used analogously.

The stator of the electromagnetic transport device 2 in the form of a PM comprises at least one stator segment 3i. Usually, the stator comprises two or more stator segments 3i which can be connected in virtually any pattern necessary for the respective application of PM. The stator of the electromagnetic transport device 2 or PM forms a transport plane. In the example shown in Fig. 3, the transport plane is, for example, a horizontal plane. However, other arrangements would of course be possible, too, e.g., vertical and/or arrangements where the transport plane is inclined at a certain angle. Essentially, the arrangement of the transport plane depends on the respective use and a respective area of application of the transport system 1.

At least one shuttle 4, 4i is moved on the transport plane, e.g., two-dimensionally along a transport path due to interacting magnetic fields. For this purpose, the stator comprises electromagnetic or magnetic elements like e.g. drive coils, which are arranged in groups in a plane on the stator or the stator segments 31, 32, 3i, which define the directions T of movement of the shuttles 4, 4i on the transport plane. Analogous to a transport device 2 in the form of an LLM, each shuttle 4, 4i comprises a magnet unit 5, 5i with drive magnets 51 (not visible in Fig. 3 due to the perspective). To move the shuttle 4, 4i on the transport plane along the transport path, the drive coils are energized accordingly, and the magnetic field generated interact with the magnet unit 5, 5i of the respective shuttle 4, 4i in such a way that the shuttle 4, 4i is moved on the transport plane along the transport path which could be defined by energizing the drive coils. Since the motor principle of planar motors is also well known, it will not be discussed in detail here.

Furthermore, the embodiment of the transport system 1, exemplary shown in the Fig. 3, comprises at least one continuous conveyor 6, in particular a belt-conveyor or chain conveyor. The at least one continuous conveyor 6 replaces at least one stator segment 3i of the PM, for example. In the shown example, the continuous conveyor 6 is arranged between a first stator segment 31 and a second stator segment 32 of the electromagnetic transport device 2 in the form of a planar motor.

The continuous conveyor 6 also comprises conveying means 7, e.g., a conveyor belt or conveyor chain, made of plastic. In particular, the conveying means 7 may be modular consisting of linked modules 71 or chain links 71. Alternatively, the conveying means 7 may be a belt of ferromagnetic material, e.g. steel, for example, comprising alternately arranged sections 72, 73 of high and low reluctance. Furthermore, the conveying means 7 comprises ferromagnetic and/or magnetic elements 8 - i.e., either ferromagnetic elements 8 only, like e.g. in case of the belt of ferromagnetic material, or magnetic elements 8 only or a combination of ferromagnetic and/or magnetic elements 8, like e.g. with the modular conveyor belt or conveyor chain. These ferromagnetic and/or magnetic elements 8 of the conveying means 7 are again arranged - in a way that a predeterminable holding force F_{H} is established between the at least one shuttle 4 of the electromagnetic device 2 and the conveying means 7 of the continuous conveyor 3 due to an interaction of the drive magnets 51 of the at least one shuttle 4 and the ferromagnetic and/or magnetic elements 8 of the conveying means 7.

Furthermore, the continuous conveyor 6 comprises at least one additional conveying means 11, which also comprises ferromagnetic and/or magnetic elements 12 (e.g., steel, iron, cobalt, nickel, etc.). The additional conveyor means 11 may also be designed a modular conveyor belt or conveyor chain, made of plastic, having linked modules or chain links, in which the ferromagnetic and/or magnetic elements 12 are arranged or in which the ferromagnetic and/or magnetic elements 12 are embedded. Alternatively, the additional conveyor means 7 may be a belt of ferromagnetic material, e.g. steel, for example, comprising alternately arranged sections 72, 73 of high and low reluctance, wherein the sections 73 of low reluctance form the ferromagnetic elements 8.

The additional conveying means 11 is arranged in parallel with the conveying means 7 (as shown in Fig. 3) or below the conveying means 7 and runs synchronously in the conveying direction M with the conveying means 7. Furthermore, the ferromagnetic and/or magnetic elements 12 of the additional conveying means 11 are arranged in such way that the ferromagnetic and/or magnetic elements 12 of the additional conveying means 11 are displaced or shifted relative to the ferromagnetic and/or magnetic elements 8 of the conveying means 7, while both conveying means 7, 11 are running synchronously in the conveying direction M.

The conveying means 7 and the additional conveying means 11 are both driven by a suitable drive unit 9. A suitable control unit 10 can be used to control and monitor the movement of the continuous conveyor 6, in particular of the conveying means 7 and the additional conveying means 11.

In the embodiment of the transport system 1, shown in Fig. 3, the beginning of the additional conveying means 11 is offset from the conveying means 7. The additional conveying means 11, for example, starts after a first transfer area A₁ and ends before a second transfer area A₂ - in the view of the movement direction M. While a shuttle 4, for example, is moving on the transport plane of the electromagnetic transport device 2 along the transport path in the direction T of movement, the shuttle 4 may be transferred from the first stator segment 31 to the continuous conveyor 6 in the first transfer area A₁, for example. In the first transfer area A₁, the shuttle 4 is, for example, moved to conveying means 7 at first, which provides the predeterminable holding force F_{H} due to its ferromagnetic and/or magnetic elements 8. After leaving first transfer area A₁, the shuttle 4 is also moved by the additional conveying means 11, which may provide an additional holding force due to its ferromagnetic and/or magnetic elements 12 and the interaction with the drive magnets 51 of the shuttle 4. If the ferromagnetic and/or magnetic elements 12 of the additional conveying means 11 are arranged in such way that the ferromagnetic and/or magnetic elements 12 of the additional conveying means 11 are displaced or shifted relative to the ferromagnetic and/or magnetic elements 8 of the conveying means 7 during the movement, it is also possible to define an orientation of the shuttle 4 on the conveying means 7, 11, for example. Additionally, the holding force F_{H} can be manipulated or adjusted by shifting of the ferromagnetic and/or magnetic elements 8 of the conveying means 7 and the ferromagnetic and/or magnetic elements 12 of the additional conveying means 11 relative to each other during the movement.

Additionally, the conveying means 7 and the additional conveying means 11 may run with different speeds controlled by the drive unit 9. Alternatively, the conveying means 7 and the additional conveying means 11 may run with the same speed controlled by the drive unit 9, wherein an additional movement is superimposed on a movement of the conveying means 7 or of the at least one additional conveying means 11. Due to the different speeds of the conveying means 7, 11 or the additional movement superimposed on the movement of one of the conveying means 7, 11, the shuttle 4 can experience an additional angular momentum, which helps to bring or to push the shuttle 4 into a desired or predefined orientation on the conveying means 7, 11. The additional movement superimposed may be periodical, for example a periodical repetition of braking and acceleration of the respective conveying means 7, 11, using a sinusoidal, triangular or other predetermined movement profile. The additional movement superimposed may alternatively be impulsive, like e.g. single short braking and/or acceleration of the respective conveying means 7,11, whereby the profile (e.g. sinus wave, ramp, etc.) of the movement impulse can be predetermined.

The shuttle 4 is then moved by the conveying means 7 and the additional conveying means 11, until the second transfer area A₂ is reached. The conveying means 7 then moves the shuttle 4 to the end of the second transfer area A₂. There the shuttle 4 is transferred from the continuous conveyor 6 to a second stator segment 32 e.g., due to the movement M. Since only the conveying means 7 runs in the second transfer A₂, the holding force F_{H} is reduced to the predetermined holding force established by the ferromagnetic and/or magnetic elements 8 of the conveying means 7 and the shuttle 4 may be more easily detached from the conveying means 7.

It is also possible that both conveying means 7, 11 start at the beginning of the first transfer area A₁ and/or end at the second transfer area A₂. Then the shuttle 4 is moved by both conveying means 7, 11 of the continuous conveyor 6 either in the first transfer area A₁ or the second transfer area A₂ or in both transfer areas A₁, A₂, for example.

To adapt the holding force F_{H} acting on the shuttle 4 based on the interaction of the drive magnets 51 of the shuttle 4 and the ferromagnetic and/or magnetic elements 8, 12 of the conveying means 7 and/or the additional conveying means 11, the conveying means 7 and/or the additional conveying means 11 can be configured to be lowered perpendicularly to the conveying direction M of the continuous conveyor 6 to a resting position. I.e., that the respective conveying means 7, 11 is moved away from the shuttle 4 to change the holding force F_{H} during operation of the transport system 1. E.g., if one of the conveying means 7, 11 is lowered towards the resting position, the holding force F_{H} acting on the shuttle 4 is reduced with the distance to the respective conveying means 7, 11, until the holding force F_{H} due to the interaction of ferromagnetic and/or magnetic elements 8, 12 of the respective conveying means 7, 11 with the drive magnets 51 of the shuttle 4 is zero, for example.

It is also possible that the additional conveying means 11 or the conveying means is lifted perpendicularly to the conveying direction M of the continuous conveyor 6 from the resting position. I.e., that the respective conveying means 7, 11 is moved towards the shuttle 4 to change or increase the holding force F_{H} during operation of the transport system 1. With lowering and/or lifting the conveying means 7 and/or the additional conveying means 11, it is possible to adapt the holding force F_{H} during operation of the transport system 1 to provide safe and reliable movement of different shuttles 4 (e.g., having different weight and/or size) or to adapt to loaded or unloaded shuttles 4. It is also possible to switch between the conveying means 7 and the at least one additional conveying means 11, to establish different predeterminable holding force values, for example, since the arrangement of the ferromagnetic and/or magnetic elements 8 of the conveying means 7 is configured in such a way, that the holding force F_{H} is specifically set to a predeterminable value and the arrangement of the ferromagnetic and/or magnetic elements 12 of the additional conveying means 11 is configured in such a way, that the holding force F_{H} is specifically set to another predeterminable value. The continuous conveyor 6 thus can be configured to move different shuttles without unwanted and/or undesired movements on the conveying means 7.

### Reference signs

- 1: Transport system
- 2: Electromagnetic transport device
- 31, 32, 3i: Stator segments
- 4: Shuttle
- 5, 5i: Magnet unit
- 51: Drive magnets
- 6: Continuous conveyor
- 7: Conveying means, conveyor belt, conveyor chain
- 71: Modules of conveyor belt, chain link
- 72: area of high reluctance; punching-out
- 8: Ferromagnetic and/or magnetic element
- 9: Drive unit
- 10: Control unit of continuous conveyor
- 11: additional conveying means, conveyor belt, conveyor chain
- 12: Ferromagnetic and/or magnetic element of the additional conveying means

- T: Direction of movement of the shuttles
- M: Conveying direction
- R: Rotatory motion
- F_{H}: Holding force
- p1, p2, p3: pole pitch
- d1, d2: chain pitch
- d3: distance between areas of low reluctance
- A₁, A₂: transfer area

## Claims

1. A transport system (1) at least comprising:
at least one electromagnetic transport device (2) with a stator (31, 32, 3i) and at least one shuttle (4, 4i), which is moveable relative to the stator (31, 32, 3i) along a transport path,
wherein drive magnets (51) are arranged on the at least one shuttle (4, 4i), and wherein the drive magnets (51) of the at least one shuttle (4, 4i) interact electromagnetically with electromagnetic or magnetic elements, in particular drive coils, arranged on the stator (31 32, 3i) to move the at least one shuttle (4, 4i) in at least one direction (T) of movement along the transport path, and
at least one continuous conveyor (6) comprising conveying means (7) to move the at least one shuttle (4) in a conveying direction (M) along the transport path, ***characterized, in that*** the conveying means (7) comprises ferromagnetic and/or magnetic elements (8), which interact with the drive magnets (51) of the at least one shuttle (4, 4i), ***and in that***
an arrangement of the ferromagnetic and/or magnetic elements (8) of the conveying means (7) is configured in such a way that a predeterminable holding force (F_{H}) is established between the at least one shuttle (4) of the electromagnetic device (2) and the conveying means (7) of the continuous conveyor (6) due to an interaction of the drive magnets (51) of the at least one shuttle (4) and the ferromagnetic and/or magnetic elements (8) of the conveying means (7).

2. The transport system (1) according to claim 1, ***characterized, in that*** the arrangement of the ferromagnetic and/or magnetic elements (8) of the conveying means (7) is adapted to a pole pitch (p1, p2, p3) of an arrangement the drive magnets (51) of the at least one shuttle (4, 4i).

3. The transport system (1) according to claim 1 or 2, ***characterized, in that*** the conveying means (7) are configured as modular conveyor belt comprising modules (71) or conveyor chain comprising chain links (71) made of plastic, wherein the ferromagnetic and/or magnetic elements (8) are embedded in or arranged on the modules (71) of the conveyor belt or the chain links (71) of the conveyor chain.

4. The transport system (1) according to claim 3, ***characterized, in that*** a chain pitch (d1, d2) of the ferromagnetic and/or magnetic elements (8) embedded in or arranged on the modules (71) of the conveyor belt or in the chain links (71) of the conveyor chain is adapted to the pole pitch (p1, p2) of the arrangement of the drive magnets (51) of the at least one shuttle (4).

5. The transport system (1) according to claim 1 or 2, ***characterized, in that*** the conveying means (7) is configured as a belt made of ferromagnetic material, in particular steel, which has alternately arranged sections (72, 73) of high reluctance and low reluctance in the conveying direction (M), wherein the sections of low reluctance (73) form the ferromagnetic elements (8).

6. The transport system (1) according to claim 3, ***characterized, in that*** a distance (d3) between the sections of low reluctance (73) forming the ferromagnetic elements (8) of belt (7) is adapted to the pole pitch (p3) of the arrangement of the drive magnets (51) of the at least one shuttle (4).

7. The transport system (1) according to one of the claims 1 to 6, ***characterized, in that*** the at least one continuous conveyor (6) comprises at least one additional conveying means (11), also comprising ferromagnetic and/or magnetic elements (12) to interact with the drive magnets (51) of the shuttle (4), wherein the at least one additional conveying means (11) runs synchronously in the conveying direction (M) in parallel or below the conveying means (7).

8. The transport system (1) according to claim 7 ***characterized, in that*** the ferromagnetic and/or magnetic elements (12) of the at least one additional conveying means (11) are arranged in such way that the ferromagnetic and/or magnetic elements (12) of the at least one additional conveying means (11) are shifted relative to the ferromagnetic and/or magnetic elements (8) of the conveying means (7) during moving the conveying means (7) and the at least one additional conveying means (11) in the conveying direction (M).

9. The transport system (1) according to claim 7 or 8, ***characterized, in that*** the conveying means (7) and the at least one additional conveying means (11) can be moved with different speeds during operation, or that the conveying means (7) and the at least one additional conveying means (11) can be moved with the same speed during operation, wherein an additional movement is superimposed on a movement of the conveying means (7) or of the at least one additional conveying means (11).

10. The transport system (1) according to claim 7 to 9, ***characterized, in that*** the at least one additional conveying means (11) is configured as modular conveyor belt comprising modules or conveyor chain comprising chain links made of plastic, wherein the ferromagnetic elements (12) are integrated in the modules of the conveyor belt or the chain links of the conveyor chain.

11. The transport system (1) according to claim 7 to 9, ***characterized, in that*** the at least one additional conveying means (11) is configured as a belt made of ferromagnetic material, in particular steel, which has alternately arranged areas (72, 73) of high reluctance and low reluctance in the conveying direction (M), wherein the areas of low reluctance (73) form the ferromagnetic elements (12) of the at least one additional conveying means (11).

12. The transport system (1) according to one of the claims 7 to 11 ***characterized, in that*** the conveying means (7) and/or the at least one additional conveying means (11) can be lowered perpendicularly to the conveying direction (M) of the continuous conveyor (6).

13. The transport system (1) according to one of the claims 1 to 13, ***characterized, in that*** the at least one electromagnetic transport device (2) is configured as a long-stator linear motor system and/or planar motor system.
